# EUROPEAN PATENT SPECIFICATION

(11) **EP 2 562 074 B1**
(45) Date of publication and mention of the grant of the patent: **07.06.2017**
(21) Application number: 11771629.0
(22) Date of filing: 15.04.2011
(51) Int. Cl.: B62M 9/16, B62M 9/125

(54) **TENSIONER FOR BICYCLE TRANSMISSION**
SPANNER FÜR EINE FAHRRADGANGSCHALTUNG
TENDEUR POUR TRANSMISSION DE BICYCLETTE

(30) Priority: 22.04.2010 ES 201030590
(43) Date of publication of application: 27.02.2013
(73) Proprietor: Orrio Iturbide, Jesús Angel, 31015 Pamplona (ES)
(72) Inventor: Orrio Iturbide, Jesús Angel, 31015 Pamplona (ES)
(86) International application number: PCT/ES2011/070264
(87) International publication number: WO 2011/131815

(56) References cited:
- WO-A1-98/12102
- WO-A1-03/064243
- WO-A1-2005/021369
- DE-U1-202005 001 843
- DE-U1-202009 004 531
- ES-A1- 448 326
- ES-T3- 2 285 581
- FR-A1- 2 508 408
- FR-A3- 2 882 581
- GB-A- 420 128
- JP-A- H 082 473
- US-A- 3 929 025
- US-A- 5 669 840
- US-A- 6 159 118
- US-A1- 2003 060 316
- US-A1- 2004 009 835
- US-B2- 7 666 111

## Description

### OBJECT OF THE INVENTION

This invention refers to a device that has been especially designed to be used on rear suspension bicycles, more specifically on bicycles with a single pinion whilst also offering advantages for bicycles without rear suspension.

The aim of the invention is to provide a device that keeps the chain or the transmission belt tensed at all times, regardless of the relative position of the different parts of the frame.

### BACKGROUND TO THE INVENTION

Within the field of the invention's practical application, bicycles, the most usual transmission system is made up of two or three plates attached to the bottom bracket spindle, with the corresponding baffle plate and several pinions attached to the rear wheel hub, with the corresponding rear gear; these sets of crowns and pinions are joined together using a chain.

Although it fulfils the envisaged purpose, this type of transmission causes a series of problems in practice such as requiring continuous maintenance, given that the gears are exposed to knocks, mud and dirt, gear changing problems at low speeds or when stopped and another series of factors that are not relevant here. This led to developing systems with gears integrated in the actual hub of the rear wheel, so that they are protected from dust, dirt and knocks, just exposing the pinion attached to this hub, and a crown associated with the bottom bracket spindle, and a belt or chain that joins up both elements, drastically reducing maintenance, simplifying structure, as it only needs one gear lever, and moving the bicycle's centre of gravity backwards and downwards, improving stability.

Although there are chain tensioners on the market that can solve the tension problem, these tensioners offer little resistance to usual impacts withstood by mountain bikes. On the other hand, there are no tensioners for belts although they would be perfect on double suspension bikes making it possible to dismantle the rear part and thereby put the belt between the plate and the pinion without having to break the frame as the tensioner would absorb the distance variations between the bottom bracket spindle and the pinion.

We can also quote the following documents: US6159118 patent that describes a pulley guide assembly mechanism for use with a bicycle gear; FR2882581 usage certificate relating to a chain tension regulator for a 4x4 vehicle; US7666111 patent on a rear bicycle gear; US5669840 patent featuring a tension device for bicycle gears; European Patent published in Spain with number ES2285581, dedicated to a structure preventing transmission overload; US3929025 patent recommending automatic gear control for bicycles and similar; international application PCT/CZ03/00005, published with number WO03064243, on a bicycle chain unit; GB420128 patent featuring improvements relating to changing gearing speeds for cycles; FR2508408 patent describing a transmission mechanism for bicycle chains; finally ES448326 patent on perfecting machine transmissions. None of these documents describes an tensioner element whose axis of rotation coincides exactly with the rear pinion shaft, consequently not benefitting from the advantages offered by this specific structural arrangement, particularly any derived from being able to position a tensioner wheel acting on the bicycle's transmission belt with radial displacement, equidistant to the aforementioned pinion shaft. Document WO 2005021369 is considered the closest prior art in accordance with the preamble of claim 1.

### DESCRIPTION OF THE INVENTION

The bicycle transmission tensioner proposed by the invention, as in claim 1, solves the aforementioned problem entirely satisfactorily so that working from this structuring, for a bike equipped with an articulated frame, with rear suspension and a transmission system integrating gear changing in the actual hub on the rear or drive wheel, the invention tensioner focuses its characteristics on the fact that it is made up of a fastening plate joined to the rear pinion, fixed directly on the bicycle's rear pinion shaft.

This fastening plate is given a groove to hold it in the right position so that the press wheel adjusts correctly on the corresponding chain or belt, working as a guide, with the special feature that when this fastening plate is loosened from the back pinion shaft, then this fastening plate will drop down under its own weight, due to gravity, meaning that the chain or belt can be dismantled without having to dismantle the adjustment or press wheel, making it much easier to change the back wheel.

The fastening plate groove can be set up in the middle of assembly for the press or adjustment wheel on the chain or belt, meaning that instead of moving the fastening plate, it remains fixed on the rear pinion shaft and it is the aforementioned press or adjustment wheel that moves through the fastening plate groove. This is therefore a simpler mechanical option.

As a complementary element there is the possibility of using a pulley, joined to the bottom bracket spindle through a fastening.plate that prevents the chain or belt coming loose from the plate.

A coil or spring can be attached to the fastening plate anchored using a washer through one end whilst the other end rests on the actual fastening plate. This washer will not be used when the fastening plate does not have a coil or spring.

In any case, when the tensioner incorporates the aforementioned washer, this is preferably cup-shaped with a perimeter rim that might be continuous or discontinuous, capable of gripping a bearing as required without submitting it to excessive pressure, so that the spring that it is attached to or that is fixed using the aforementioned washer acts as a tensioner element in bicycles without double suspension, meaning that their frame is fixed, or in double suspension bicycles that do not offer a particularly extensive displacement range between plate and pinion so that the aforementioned spring attached to the fastening plate, combined with the press or adjustment wheel, will constitute the actual tensioner device.

Finally, it should be added that on bicycles without double suspension, with a rigid frame, the fastening plate fixed directly on the bicycle's rear pinion can have a coil or spring or neither.

This makes for an extremely effective device that can hold the chain or belt perfectly tensioned at all times, chiefly gripping the plate or pinion it is engaged with, making it practically impossible to uncouple this chain or belt.

### DESCRIPTION OF THE DRAWINGS

In order to complement this description and improve comprehension of this invention's features, in accordance with a preferential example of its practical embodiment, an accompanying set of drawings forms part of this description providing illustrations whilst not limiting the details. These diagrams represent the following features:
Figure 1 - Shows an amplified side view of the tensioner in this invention where the fastening plate is directly fastened on the rear pinion shaft.
Figure 2 - Shows another detailed view of an alternative embodiment shown in the previous diagram, this time showing the fastening plate groove on which the press or adjustment wheel is mounted.
Figure 3.- Shows a cross-section vertical view of the tensioner assembly represented in the previous diagram.
Figure 4.- Shows an elevated side view of an alternative embodiment to diagram 2. In this case the press or adjustment wheel is mounted directly on the fastening plate and not on its groove.
Figure 5 - Finally shows a cross section detail like figure 3, this time corresponding to the alternative embodiment shown in figure 4.
Figure 6. - Shows a schematic representation of the fastening plate attached to the plate-bottom bracket spindle assembly.
Figure 7 - Shows a schematic representation similar to above in accordance with a practical alternative embodiment.

### PREFERRED EMBODIMENT OF THE INVENTION

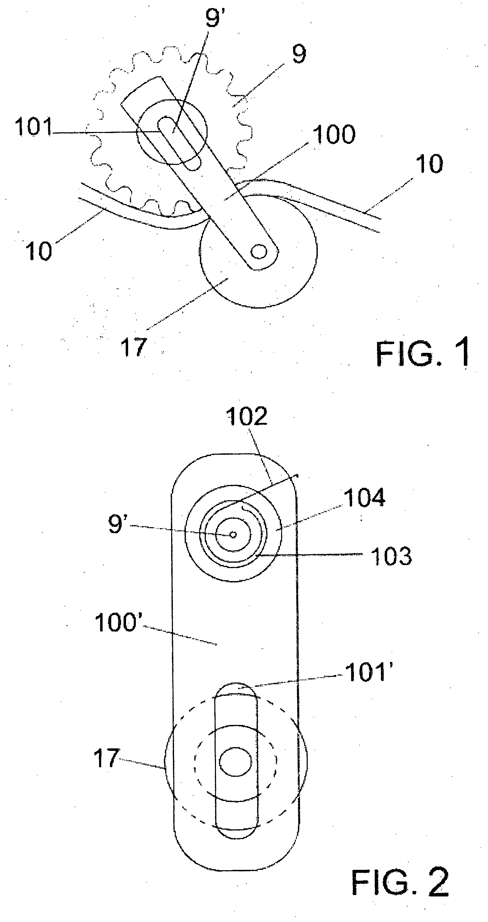

Referring to the highlighted diagrams, particularly figure 1, it can be seen that the invention tensioner involves a fastening plate (100) intended to be fixed on to the bike frame, assembled directly to the corresponding shaft (9') of the bicycle's rear pinion (9). This fastening plate (100) is given a groove (101) through which this rear pinion (9) shaft (9') is assembled so that this fastening plate (100) can hold the press or adjustment wheel (17) on the chain or belt (10), so that when this fastening plate (100) is released or loosened from the shaft (9') it is mounted on, then this fastening plate (100) drops under its own weight, separating the press or adjustment wheel (17) from the chain or belt (10), allowing the bicycle's rear wheel to be dismantled without having to dismantle this press or adjustment wheel (17).

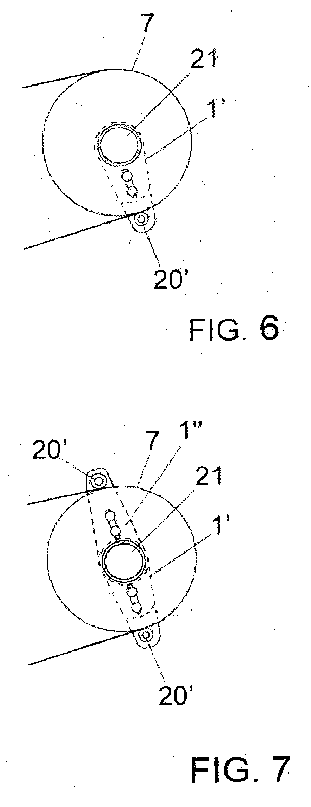

In accordance with the practical embodiment shown in figure 6, the described device can have a fastening plate (1') joined to the plate (7) attached to the bottom bracket spindle (8), with a bushing (20') in the shape of a cylinder or with a "T" or "U" cross section, assuring that the chain or belt adapts correctly to the plate (7).

As illustrated in figure 7, in another practical embodiment example, there can be a second fastening plate (1") on the bottom bracket spindle to adjust the corresponding roller or bushing (20') located in the top position, intended to prevent the chain or belt from coming out.

In an alternative embodiment shown in figure 2, the fastening plate (100') has a groove (101') on which the press adjustment wheel (17) is mounted, with the possibility of moving up or down against the fastening plate (100') and therefore against the bicycle's rear pinion (9) shaft (9').

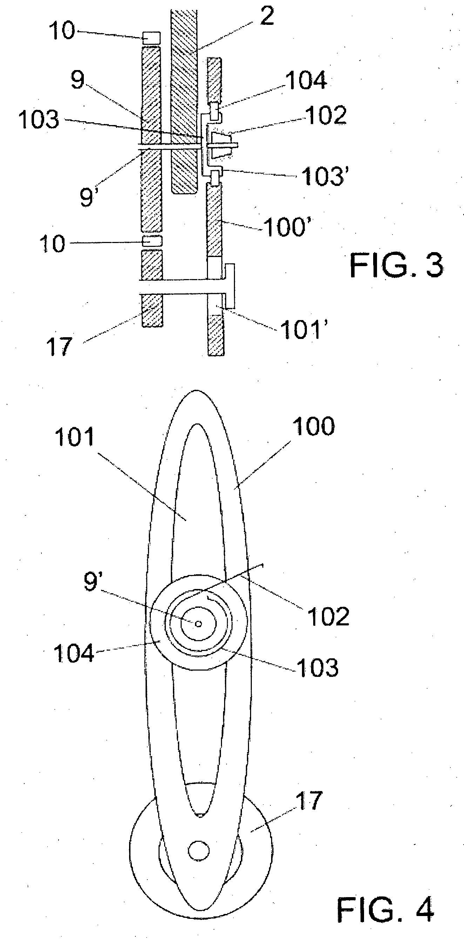

This aforementioned alternative embodiment is represented in figures 2 and 3. They show how a spring (102) participates in the tensioner assembly, anchored using a washer (103), fixed to one of the ends of this spring (102), whilst at the other end of this spring (102) there is a stopper that is fixed on the actual fastening plate (100'). In this alternative embodiment shown in figures 2 and 3, the washer (103) is cup-shaped with a perimeter rim (103') to hold the corresponding bearing (104), strong enough to hold it without submitting it to excessive pressure.

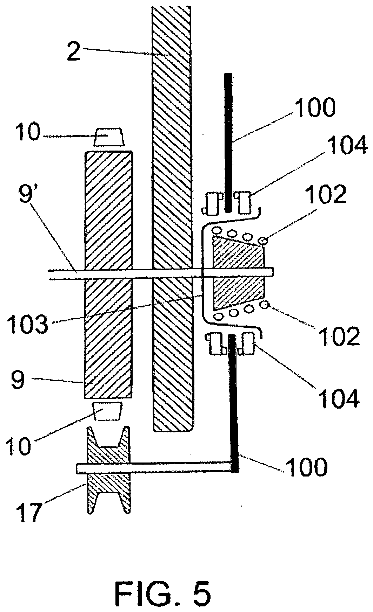

The alternative embodiment shown in figures 4 and 5 features the fastening plate (100) with its corresponding groove (101) and its assembly on the bicycle's rear pinion (9) shaft (9'). In this case the press or adjustment wheel (17) is mounted directly on the aforementioned fastening plate (100).

## Claims

1. Bicycle transmission tensioner for a bicycle, said bicycle having a hub with a single pinion, and a bottom bracket chain wheel, said tensioner comprising a fastening plate (100, 100') adapted to be fixed to a bicycle frame (2) facing a rear pinion (9), **characterised in that** said fastening plate (100, 100') is adapted to be assembled directly on a corresponding rear pinion shaft (9'), said fastening plate (100, 100') supporting a chain or belt tensioning wheel (17) while being directly connected to said tensioning wheel (17).

2. Bicycle transmission tensioner, according to claim 1, **characterised in that** the fastening plate (100) is given a groove (101) used to mount it on the rear pinion (9) shaft (9'), permitting the aforementioned fastening plate (100) to be moved in one direction or another and corresponding tightening or loosening of the chain or belt (10) by the wheel (17).

3. Bicycle transmission tensioner, according to claim 1, **characterised in that** the fastening plate (100') is given a groove (101') on which the press or adjustment wheel (17) is mounted, with the possibility of moving it to tighten or adjust the respective chain or belt (10).

4. Bicycle transmission tensioner, according to claim 1, **characterised in that** a coil or spring (102) is mounted on the fastening plate (100, 100'); at one end, it is anchored using a washer (103) and on the other there is an end stop, held by the actual fastening plate (100, 100'), whose coil or spring (102) is used for the corresponding tensioning.

5. Bicycle transmission tensioner, according to previous claims, **characterised by** having a fastening plate (1') that incorporates fastening devices to the frame in correspondence with the bottom bracket spindle (8). It has a bushing (20') that can be cylindrical or have a "T" or "U" shaped cross-section, assuring that the chain or belt (10) adapts correctly to the plate (7).

6. Bicycle transmission tensioner according to claim 5, **characterised in that** there is a second fastening plate (1") in the bottom bracket spindle to adjust the corresponding bushing (20') in its top position.

## Patentansprüche

1. Spanner für eine Fahrradgangschaltung, die mit einer Nabe mit einem einzigen Ritzel sowie mit einem Tretlager-Kettenrad versehen ist, wobei der Spanner über eine Befestigungsplatte (100, 100') verfügt, die so ausgelegt ist, dass sie am Fahrradrahmen (2) gegenüber dem hinteren Ritzel (9) befestigt wird und **dadurch gekennzeichnet** ist, das besagte Befestigungsplatte (100, 100') für die direkte Montage an der entsprechenden Ritzelwelle (9') ausgelegt ist und diese Platte (100, 100') ein Ketten- oder Riemenspannrad (17) stützt und direkt mit besagtem Spannrad (17) verbunden ist.

2. Spanner für eine Fahrradgangschaltung gemäß Anspruch 1, **dadurch gekennzeichnet, dass** die Befestigungsplatte (100) mit einer Nut (101) versehen ist, die dazu dient, die Platte an der Welle (9') des hinteren Ritzels (9) zu befestigen, und die genannte Befestigungsplatte (100) in beide Richtungen bewegt werden und die Kette bzw. den Riemen (10) so mithilfe des Rades (17) entsprechend spannen oder lockern kann.

3. Spanner für eine Fahrradgangschaltung gemäß Anspruch 1, **dadurch gekennzeichnet, dass** die Befestigungsplatte (100') mit einer Nut (101') versehen ist, auf die das Druck- oder Einstellrad (17) montiert ist, mit der Möglichkeit bewegt zu werden, um die entsprechende Kette bzw. den Riemen (10) zu spannen bzw. anzupassen.

4. Spanner für eine Fahrradgangschaltung gemäß Anspruch 1, **dadurch gekennzeichnet, dass** eine Spule oder Feder (102) auf der Befestigungsplatte (100, 100') montiert ist; an einem Ende ist sie mithilfe einer Unterlegscheibe (103) verankert, am anderen Ende befindet sich ein Anschlag, der von der Befestigungsplatte (100, 100') selbst gehalten wird, deren Spule oder Feder (102) für den jeweiligen Spannvorgang genutzt wird.

5. Spanner für eine Fahrradgangschaltung gemäß den vorstehenden Ansprüchen, **dadurch gekennzeichnet, dass** er mit einer Befestigungsplatte (1') ausgestattet ist, die über Vorrichtungen zum Befestigen am Rahmen in Ausrichtung mit der Tretlagerachse (8) verfügt. Weiterhin verfügt er über eine Buchse (20'), die zylindrisch oder im Querschnitt "T" oder "U"-förmig sein kann und sicherstellt, dass die Kette oder der Riemen (10) korrekt an der Platte (7) sitzt.

6. Spanner für eine Fahrradgangschaltung gemäß Anspruch 5, **dadurch gekennzeichnet, dass** sich an der Tretlagerachse eine zweite Befestigungsplatte (1") befindet, die die entsprechende Buchse (20') auf ihrer obere Position einrichtet.

## Revendications

1. Tendeur pour transmission de bicyclette pour une bicyclette. Cette bicyclette comporte un moyeu avec un unique pignon et une roue de la chaîne du pédalier et ce tendeur une platine (100, 100') à monter sur le cadre (2) de la bicyclette en correspondance avec le pignon arrière (9), **caractérisé par le fait que** cette platine (100, 100') est destinée à être montée directement sur l'axe (9') correspondant du pignon arrière ; cette platine (100, 100') soutient une roue (17) de tension de la chaîne ou courroie directement reliée à cette roue de tension (17).

2. Tendeur pour transmission de bicyclette, selon la revendication 1, **caractérisé par le fait que** la platine (100) comporte une rainure (101) à travers laquelle elle se monte sur l'axe (9') du pignon arrière (9) de façon à permettre le déplacement dans un sens ou dans l'autre de ladite platine (100) et la tension ou détente correspondante de la courroie ou chaîne (10) par la roue (17).

3. Tendeur pour transmission de bicyclette, selon la revendication 1, **caractérisé par le fait que** la platine (100') comporte une rainure (101') sur laquelle est montée la roue de pression ou réglage (17), avec possibilité de déplacement de celle-ci pour la pression ou le réglage de la chaîne ou courroie respective (10).

4. Tendeur pour transmission de bicyclette, selon la revendication 1, **caractérisé par le fait que** sur la platine (100, 100') est monté un ressort (102) qui se trouve ancré à l'une des extrémités par une rondelle (103) et qui à l'autre fait butée tenu par la propre platine (100, 100'), dont le ressort (102) constitue le moyen de tension correspondant.

5. Tendeur pour transmission de bicyclette, selon les revendications précédentes, **caractérisé par** le fait de disposer d'une platine (1') qui incorpore des moyens de fixation sur le cadre en correspondance avec l'axe du pédalier (8), ainsi que d'un manchon (20') configurable de forme cylindrique ou à section en "T" ou en "U", qui assure une bonne adaptation de la chaîne ou courroie (10) au plateau (7).

6. Tendeur pour transmission de bicyclette, selon la revendication 5, **caractérisé par le fait que** l'axe du pédalier comporte une seconde platine (1") pour ajuster le manchon correspondant (20') en position supérieure.
